# EUROPEAN PATENT SPECIFICATION

(11) **EP 1 689 794 B1**
(45) Date of publication and mention of the grant of the patent: **23.12.2015**
(21) Application number: 04795412.8
(22) Date of filing: 15.10.2004
(51) Int. Cl.: C08F 10/00, B01J 4/00, B01J 8/00, B01J 19/18, B01J 19/24, C08F 6/00, C08F 10/02, C08F 2/14, C08F 2/01, C08F 6/16, C08F 6/24, C08F 210/16, C08F 210/14

(54) **SEPARATION OF POLYMER PARTICLES AND VAPORIZED DILUENT IN A CYCLONE**
TRENNUNG VON POLYMERTEILCHEN UND VERDAMPFTEM VERDÜNNUNGSMITTEL IN EINEM ZYKLON
SEPARATION DE PARTICULES POLYMERES ET DE DILUANT VAPORISE DANS UN CYCLONE

(30) Priority: 31.10.2003 US 699095
(43) Date of publication of application: 16.08.2006
(60) Divisional application: 15191018.9
(73) Proprietor: CHEVRON PHILLIPS CHEMICAL COMPANY LP, The Woodlands, TX 77380 (US)
(72) Inventor: VERSER, Donald, W., Houston, TX 77025 (US); BURNS, David, H., Houston, TX 77025 (US); HOTTOVY, John, D., Bartlesville, OK 74006 (US)
(74) Representative: Nash, David Allan
(86) International application number: PCT/US2004/034244
(87) International publication number: WO 2005/044871

(56) References cited:
- WO-A-2004/026455
- WO-A-2004/026914
- US-A- 5 575 979
- US-A1- 2003 027 945
- US-A1- 2003 130 442
- US-B1- 6 262 191
- US-B1- 6 420 497

## Description

### TECHNICAL FIELD

This invention relates to the polymerization of olefin monomers in a liquid medium.

### BACKGROUND ART

Addition polymerizations may be carried out in a liquid which is a solvent for the resulting polymer. When high density (linear) ethylene polymers first became commercially available in the 1950's, this was the method used. It was soon discovered that a more efficient way to produce such polymers was to carry out the polymerization under slurry conditions. More specifically, the polymerization technique of choice became continuous slurry polymerization in a pipe loop reactor with the product being taken off through settling legs which operated on a batch principle to recover product. This technique has enjoyed international success with billions of pounds of ethylene polymers being so produced annually. With this success has come the desirability, under certain circumstances, of building a smaller number of large reactors as opposed to a larger number of small reactors for a given plant capacity.

The product may be taken off continuously as well. However the product is taken off, the diluent is separated from the solid polymer particles so that the solid polymer particles may be recovered. Various flash arrangements have been proposed and/or used for flashing the diluent. In general, it is desirable to separate the diluent in such a way that it may be easily and inexpensively recycled to the loop reactor.

According to US-A-6420497 an olefin polymerization apparatus is disclosed wherein monomer, diluent and catalyst are circulated in a continuous pipe loop reactor and an intermediate product slurry is recovered by a continuous product take off means. The intermediate product slurry is passed to a hydrocyclone to stratify polymer particles based on size. A slurry containing predominantly fines is withdrawn overhead and returned to the reaction zone. The slurry containing predominantly fines is preferably returned to the polymerization zone just upstream of the circulation pump and in a preferred embodiment this pressure differential is the sole driving force for the hydrocyclone separation. In another embodiment the product slurry from the bottom of the hydrocyclone is passed to a solids-liquid separator where the solids settle to the bottom and essentially polymer free diluent is recycled. In another embodiment, the intermediate product slurry is withdrawn via a conical settling leg. Because of the converging nature of the leg, as polymer is withdrawn the velocity increases progressively going from the entry to the exit of the leg thus avoiding polymer build-up.

US-A-2003027945 describes a process and apparatus for passing a polymerization effluent, comprising solid polymer, unreacted monomer, diluent and minor amounts of contaminants, to a high pressure flash where most of the fluid components are flashed and wherein a slip stream comprising diluent and minor amounts of monomer is separated from the bulk of the flashed fluid components. The slip stream is subjected to olefin removal to give an essentially olefin-free stream for recycle to a catalyst mud preparation area. The bulk of the flashed fluid components are recycled directly back to the polymerization zone without expensive olefin removal, although treatment to remove other contaminants can optionally be performed. The polymer and entrained fluid is passed to a low pressure flash zone where the fluids are flashed off, compressed and joined with the flash from the high pressure flash tank. Because the bulk of the fluids are removed in the high pressure flash, compression and cooling of product fluids prior to recycle is kept to a minimum.

According to WO-A-2004026914 polymer solids are maintained in an intermediate pressure zone for a desired polymer solids residence time and then transferred to a purge zone or other lower pressure zone. An increase in the polymer solids residence time in the intermediate pressure zone allows more diluent to flash or separate, thereby avoiding or reducing the need for a low pressure flash zone. A fluff chamber may be disposed between the intermediate pressure zone and a lower pressure zone. A transporter tank may be used to transport polymer solids after the intermediate pressure zone.

According to WO-A-2004026455 a catalyst slurry for a polymerization reactor is prepared in a mixing tank and the catalyst slurry fed to one or more storage tanks. The storage tanks can include agitators so that the catalyst slurry is maintained at an essentially homogeneous solids-to-liquid ratio. From the storage tank(s), the catalyst slurry can be pumped to the polymerization reactor along a fluid passage having a flow meter. The flow of the catalyst slurry can be continuous and/or adjusted based on a measured parameter. The catalyst slurry may be continuously and reliability fed to the polymerization reactor.

According to US-A-5575979 an apparatus and method are provided for separating diluents from solid polymers in an effluent extracted from a polymerization reactor. The separation utilizes a two-stage flash involving a first intermediate pressure flash and a second lower pressure flash, with the first intermediate pressure flash occurring in a cyclone vessel having an extended solids reservoir. Polymer effluent is removed from the loop reactor to a settling leg which is connected in fluid communication with the reactor.

US-A-6262191 describes a process and apparatus for passing a polymerization effluent, comprising solid polymer, unreacted monomer, diluent and minor amounts of contaminants, to a high pressure flash where most of the fluid components are flashed and wherein a slip stream comprising diluent and minor amounts of monomer is separated from the bulk of the flashed fluid components. The slip stream is subjected to olefin removal to give an essentially olefin-free stream for recycle to a catalyst mud preparation area. The bulk of the flashed fluid components are recycled directly back to the polymerization zone without expensive olefin removal, although treatment to remove other contaminants can optionally be performed. The polymer and entrained fluid is passed to a low pressure flash zone where the fluids are flashed off, compressed and joined with the flash from the high pressure flash tank.

US-A-20030130442 describes a process in which a polymerization process is carried out in a loop reactor. Polymerization slurry may be removed from the loop reactor by continuous discharge through a discharge conduit. The polymerization effluent passes from the discharge conduit to a discharge valve to a conduit which is provided with a line heater and into a first flash tank which separates vaporized liquid medium from polymer slurry/solids. The conduit has an indirect heat exchange means such as a flash line heater. Vaporized liquid medium comprising diluent and unreacted monomoers exit the first flash tank via transfer conduit through which it is passed into a separator, such as a cyclone.

### DISCLOSURE OF INVENTION

In accordance with a first aspect of this invention, a process for producing solid polymer particles is provided. The process includes polymerizing, in a loop reaction zone, at least one monomer to produce a fluid slurry comprising solid polymer particles in a liquid medium (for example, a liquid diluent). A portion of the slurry is withdrawn continuously as an intermediate product of the process, such as by using an elongated hollow appendage. The withdrawn portion (the intermediate product) is passed through a heated conduit, producing a concentrated intermediate product and vaporized diluent. The concentrated intermediate product and vaporized diluent are separated by centrifugal force in a cyclone, and the concentrated intermediate product is passed to a receiving zone.

In the present process, at least about 75% of the vaporized diluent (or other vaporized medium) can be separated from the concentrated intermediate product in the cyclone. Alternatively, at least about 90% of the vaporized diluent (or other vaporized medium) can be separated from the concentrated intermediate product in the cyclone. Alternatively, at least about 95% of the vaporized diluent (or other vaporized medium) can be separated from the concentrated intermediate product in the cyclone. Alternatively, at least about 99% of the vaporized diluent (or other vaporized medium) can be separated from the concentrated intermediate product in the cyclone. Alternatively, at least about 99.9% of the vaporized diluent (or other vaporized medium) can be separated from the concentrated intermediate product in the cyclone.

Rather than characterizing cyclone efficiency on the basis of diluent separation, one may characterize cyclone efficiency based on separation of solids from the gas stream. In the present process, at least about 90% of the polymer solids can be separated from the liquid medium in the cyclone. Alternatively, at least about 95% of the polymer solids can be separated from the liquid medium in the cyclone. Alternatively, at least about 99% of the polymer solids can be separated from the liquid medium in the cyclone. Alternatively, at least about 99.9% of the polymer solids can be separated from the liquid medium in the cyclone. The solids separation efficiency can be very high (99.99% or higher, for example 99.999%), but the efficiency depends in part on particle size distribution.

The process may also include passing the separated vaporized diluent (or other vaporized medium) from the cyclone to a filter and filtering fine polymer particles from the separated vaporized diluent. The separated vaporized diluent (or other vaporized medium) exiting the cyclone before it reaches the filter can contain less than about 95% by weight fine polymer particles, alternatively less than about 99% by weight fine polymer particles, alternatively less than about 99.9% by weight fine polymer particles, alternatively less than about 99.99% by weight fine polymer particles, alternatively less than about 99.999% by weight fine polymer particles.

In accordance with a second aspect of the invention, a loop reactor apparatus is provided. The apparatus includes a pipe loop reactor adapted for conducting an olefin polymerization process comprising polymerizing at least one olefin monomer to produce a fluid slurry comprising solid olefin polymer particles in a liquid medium (for example, a liquid diluent). The apparatus also includes at least one elongated hollow appendage (for example, a 2 inch (51 mm) pipe) in direct fluid communication with the pipe loop reactor. The elongated hollow appendage is adapted for continous removal of a portion of the fluid slurry from the piper loop reactor. The apparatus also includes a flashline in fluid communication with the elongated hollow appendage. The flashline is surrounded by a conduit adapted for indirect heating. The apparatus also includes a cyclone in fluid communication with the flashline. The flashline discharges to the cyclone.

The loop reactor apparatus may also include a first chamber in fluid communication with the cyclone, a second chamber in fluid communication with the first chamber, a first valve disposed between the first chamber and the second chamber, a purge column in fluid communication with the fluff chamber, a second valve disposed between the second chamber and the purge column, and a controller for operating the first valve and the second chamber valve so that the valves are not open at the same time. The cyclone may have a vapor outlet and a solids outlet. The loop reactor apparatus may also include a fine polymer particle filter fluidly connected to the cyclone. The loop reactor apparatus may also include a funnel (transition pipe piece) between the flashline and the cyclone.

### BRIEF DESCRIPTION OF DRAWINGS

FIG. 1 is a view of a loop reactor and polymer recovery system;
FIG. 2 is cross section along line 2--2 of FIG. 1 showing a continuous take-off appendage;
FIG. 3 is a cross section along line 3--3 of FIG. 2 showing a ram valve arrangement in the continuous take-off assembly;
FIG. 4 is a cross section of a tangential location for the continuous take-off assembly;
FIG. 5 is a side view of an elbow of the loop reactor showing both a settling let and continuous take-off assemblies;
FIG. 6 is a cross section across line 6--6 of FIG. 5 showing the orientation of two of the continuous take-off assemblies;
FIG. 7 is a side view showing another orientation for the continuous take-off assembly;
FIG. 8 is a cross sectional view of the impeller mechanism;
FIG. 9 is a view showing another configuration for the loops wherein the upper segments 14a are 180 degree half circles and wherein the vertical segments are at least twice as long as the horizontal segments and
FIG. 10 is a view showing the longer axis disposed horizontally.
FIG. 11 is a view of a downstream recovery system.
FIGS. 12(a) and 12(b) are top and side views, respectively, of a cyclone separator.

### BEST MODE FOR CARRYING OUT THE INVENTION

Surprisingly, it has been found that continuous take-off of product slurry in an olefin polymerization reaction carried out in a loop reactor in the presence of an inert diluent allows operation of the reactor at a much higher solids concentration. Commercial production of predominantly ethylene polymers in isobutane diluent had generally been limited (in the past) to a maximum solids concentration in the reactor of 37-40 weight percent. However, the continuous take-off was found to allow significant increases in solids concentration. Furthermore, the continuous take-off itself brings about some additional increase in solids content as compared with the content in the reactor from which it takes off product because of the placement of the continuous take-off appendage which selectively removes a slurry from a stratum where the solids are more concentrated. Hence concentrations of greater than 40 weight percent are possible in accordance with this invention. Throughout this application, the weight of catalyst is disregarded since the productivity, particularly with chromium oxide on silica, is extremely high.

Also surprisingly, it had been found that more aggressive circulation higher circulation rates with attendant higher solids concentration) higher solids are not attendant but may be possible with high circulation rates can be employed. Indeed more aggressive circulation in combination with the continuous take-off, solids concentrations of greater than 50 weight percent can be removed from the reactor by the continuous take-off. For instance, the continuous take-off can easily allow operating at 5-6 percentage points higher; i.e., the reactor can be adjusted to easily raise solids by 10 percent; and the more aggressive circulation can easily add another 7-9 percentage points which put the reactor above 50 percent. But, because the continuous take-off is positioned to take-off slurry from a stratum in the stream which has a higher than average concentration of solids, the product actually recovered has about 3 percentage points (or greater) higher concentration than the reactor slurry average. Thus the operation can approach an effective slurry concentration of 55 weight percent or more, i.e. 52 percent average in the reactor and the removal of a component which is actually 55 percent (i.e. 3 percentage points) higher.

It must be emphasized that in a commercial operation as little as a one percentage point increase in solids concentration is significant. Therefore going from 37-40 average percent solids concentration in the reactor to even 41 is important; thus going to greater than 50 is truly remarkable.

The present invention is applicable to any olefin polymerization in a loop reactor producing a product slurry of polymer and unreacted monomer (in the case of polypropylene) or (unreacted monomer and diluents in the case of polyethylene) diluent. In the case of polypropylene a diluent is not employeed. Suitable olefin monomers are 1-olefins having up to 8 carbon atoms per molecule and no branching nearer the double bond than the 4-position. The invention is particularly suitable for the homopolymerization of ethylene and the copolymerization of ethylene and a higher 1 -olefin such as butene, 1-pentene, 1-hexene, 1-octene or 1-decene. Especially preferred is ethylene and 0.01 to 10 weight percent, alternatively 0.01 to 5 weight percent, alternatively 0.1 to 4 weight percent higher olefin based on the total weight of ethylene and comonomer. Alternatively sufficient comonomer can be used to give the above-described amounts of comonomer incorporation in the polymer.

The present invention is applicable to any slurry polymerization in a liquid medium. The invention is particularly applicable to olefin polymerizations in a liquid diluent in which the resulting polymer is mostly insoluble under polymerization conditions. Most particularly the invention is applicable to any olefin polymerization in a loop reactor utilizing a diluent so as to produce a slurry of polymer solids and liquid diluent.

Suitable diluents (as opposed to solvents or monomers) are well known in the art and include hydrocarbons which are inert and liquid under reaction conditions. Suitable hydrocarbons include isobutane, propane, n-pentane, i-pentane, neopentane and n-hexane, with isobutane being especially preferred.

Additionally, the present techniques may be employed where the unreacted monomer is the liquid medium for the polymerization. For example, the present techniques may be used for the polymerization of propylene where propylene is the liquid medium and an inert diluent is not present in any substantial amount. A diluent may still be used for the catalyst. For illustration, but not as a limitation, the present invention will be described in connection with a polyethylene process using an inert diluent as the liquid medium, but it is to be understood that the present invention may also be employed where the monomer is used as the liquid medium and would take the place of the diluent in the following descriptions.

Suitable catalysts are well known in the art. Particularly suitable is chromium oxide on a support such as silica as broadly disclosed, for instance, in U.S. Patent No. 2,825,721. Reference herein to silica supports is meant to also encompass any known silica containing support such as, for instance, silica-alumina, silica-titania and silica-alumina-titania. Any other known support such as aluminum phosphate can also be used. The invention is also applicable to polymerizations using organometal catalysts including those frequently referred to in the art as Ziegler catalysts (or Ziegler-Natta catalysts) and metallocene catalysts.

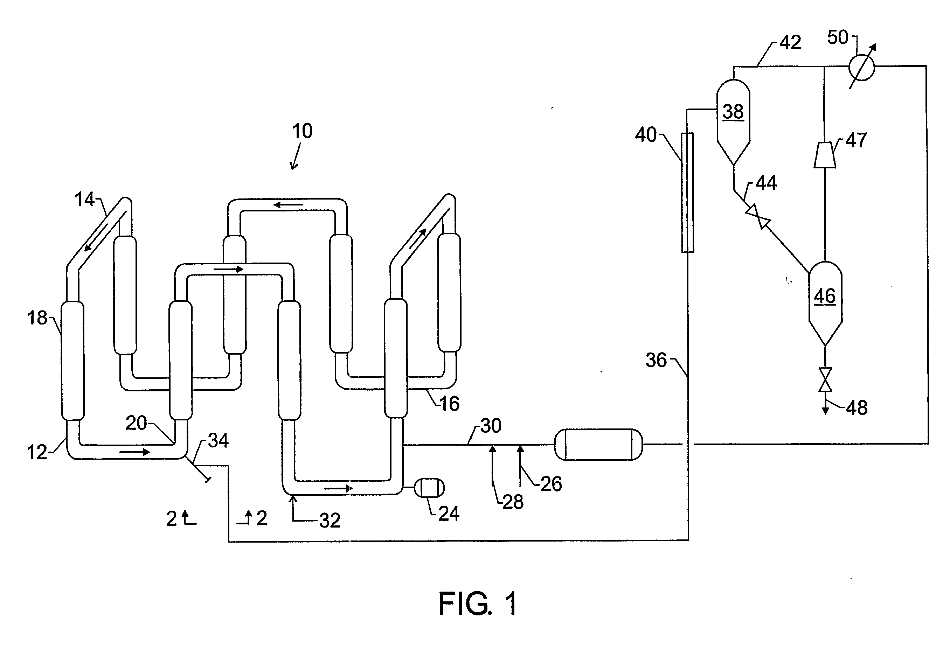

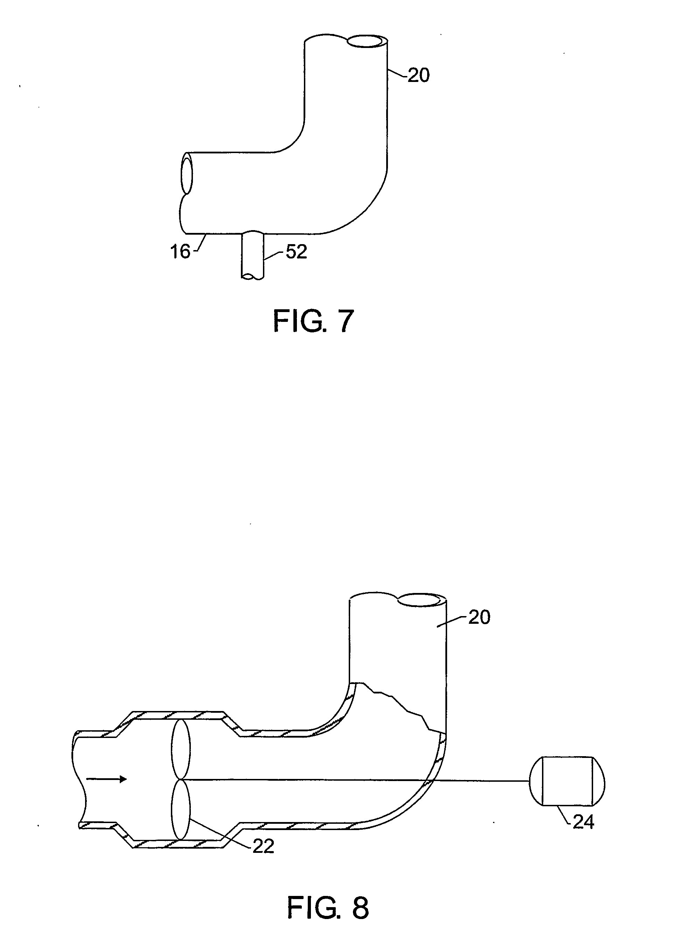

Referring now to the drawings, FIG. 1 shows a loop reactor 10 having vertical segments 12, upper horizontal segments 14 and lower horizontal segments 16. These upper and lower horizontal segments define upper and lower zones of horizontal flow. The reactor is cooled by means of two pipe heat exchangers formed by pipe 12 and jacket 18. Each segment is connected to the next segment by a smooth bend or elbow 20 thus providing a continuous flow path substantially free from internal obstructions. The polymerization mixture is circulated by means of impeller 22 (shown in FIG. 8) driven by motor 24. Monomer, comonomer, if any, and make up diluent are introduced via lines 26 and 28 respectively which can enter the reactor directly at one or a plurality of locations or can combine with condensed diluent recycle line 30 as shown. Catalyst is introduced via catalyst introduction means 32 which provides a zone (location) for catalyst introduction. The elongated hollow appendage for continuously taking off an intermediate product slurry is designated broadly by reference character 34. Continuous take-off mechanism 34 is located in or adjacent to a downstream end of one of the lower horizontal reactor loop sections 16 and adjacent or on a connecting elbow 20.

The continuous take-off appendage is shown at the downstream end of a lower horizontal segment of the loop reactor which is the preferred location. The location can be in an area near the last point in the loop where flow turns upward before the catalyst introduction point so as to allow fresh catalyst the maximum possible time in the reactor before it first passes a take-off point. However, the continuous take-off appendage can be located on any segment or any elbow.

Also, the segment of the reactor to which the continuous take-off appendage is attached can be of larger diameter to slow down the flow and hence further allow stratification of the flow so that the product coming off can have an even greater concentration of solids.

The continuously withdrawn intermediate product slurry is passed via conduit 36 into a first chamber, for example, a high pressure flash chamber 38. Conduit 36 includes a surrounding conduit 40 which is provided with a heated fluid which provides indirect heating to the slurry material in flashline conduit 36. Vaporized diluent exits the flash chamber 38 via conduit 42 for further processing which includes condensation by simple heat exchange using recycle condenser 50, and return to the system, without the necessity for compression, via recycle diluent line 30. Recycle condenser 50 can utilized any suitable heat exchange fluid known in the art under any conditions known in the art. However preferably a fluid at a temperature that can be economically provided is used. A suitable temperature range for this fluid is from about 32 degrees F 0°C about to 200 (93°C), alternatively from about 70 degrees F (21°C) to about 100 degrees F (38°C). Polymer particles are withdrawn from high pressure flash chamber 38 via line 44 for further processing using techniques known in the art. Preferably they are passed to low pressure flash chamber 46 and thereafter recovered as polymer product via line 48. Separated diluent passes through compressor 47 to line 42. This high pressure flash design is broadly disclosed in Hanson and Sherk, U.S. Patent No. 4,424,341. In U.S. Patent No. 4,424,341, a method is provided for recovering polymer solids from a polymerization effluent comprising a slurry of the polymer solids in a liquid diluent. The method comprises heating the effluent and vaporizing diluent in the heated effluent by exposing the heated effluent to a pressure drop in a first flash step. The pressure and temperature of the heated effluent in the first flash step are such that a major amount of the diluent will be vaporized and the vapor can be condensed without compression by heat exchange with a fluid having a temperature in the range of about 40 degrees F (4°C) to about 130 degrees F (54°C). The diluent vapor is separated from the polymer solids and then condensed without compression by heat exchange with a fluid having a temperature in the range of about 40 degrees F (4°C) to about 130 degrees F (54°C). The polymer solids from the first flash step are then subjected to a lower pressure flash step to vaporize additional remaining diluent if any, and the diluent vapor and polymer solids are separated.

Surprisingly, it has been found that the continuous take-off not only allows for higher solids concentration upstream in the reactor, but also allows better operation of the high pressure flash, thus allowing the majority of the withdrawn diluent to be flashed off and recycled with no compression. Indeed, 70 to 90 percent of the diluent can generally be recovered in this manner. Preferably 90 to 95 percent or more, alternatively 90 to 99 percent or more, alternatively 90 to 99.9 percent or more, of the diluent is reserved in this fashion. Because the flow is continuous instead of intermittent, the flashline heaters work better. Also the flashlines may be designed with an appropriate amount of pressure drop to get high velocities and high heat transfer coefficients and to limit maximum flow. In such designs, the CTO outlet pressure will be higher than it might be otherwise. The pressure drop after the continuous take off valve (which regulates the rate of continuous flow out of the reactor) is not as drastic as the pressure drop after the firing valve of a settling leg. With settling legs, the slurry temperature in the flash line is higher, and less heat is transferred into the slurry, making the flash line heater less efficient.

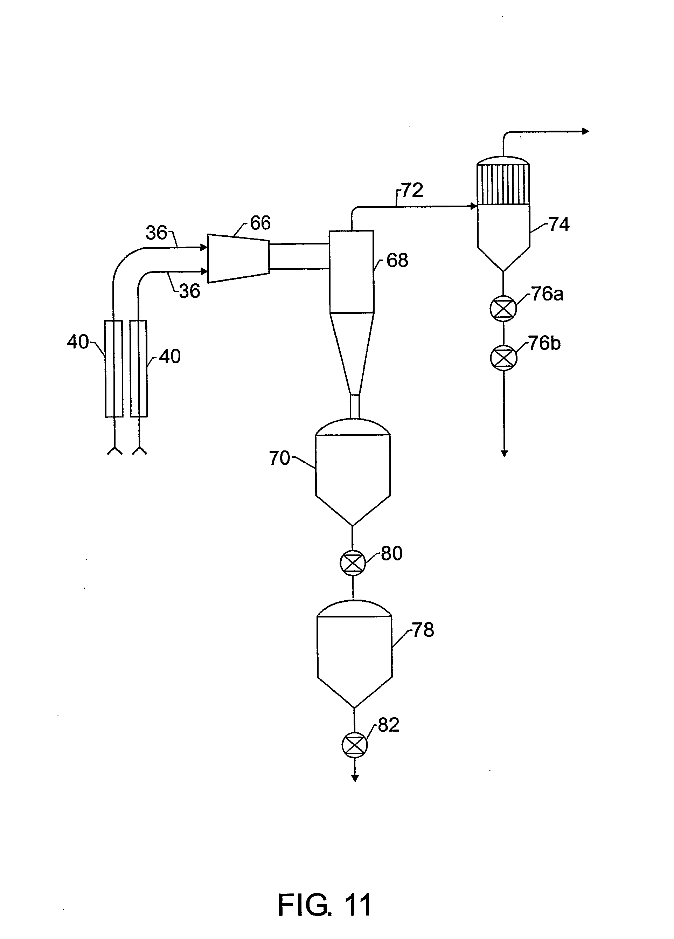

In accordance with the second aspect of this invention, the flashline heater discharges to a cyclone that separates vaporized diluent from polymer solids. The cyclone may be connected to a flash tank or a fluff receiver as shown in FIG. 11, which is described in greater detail below.

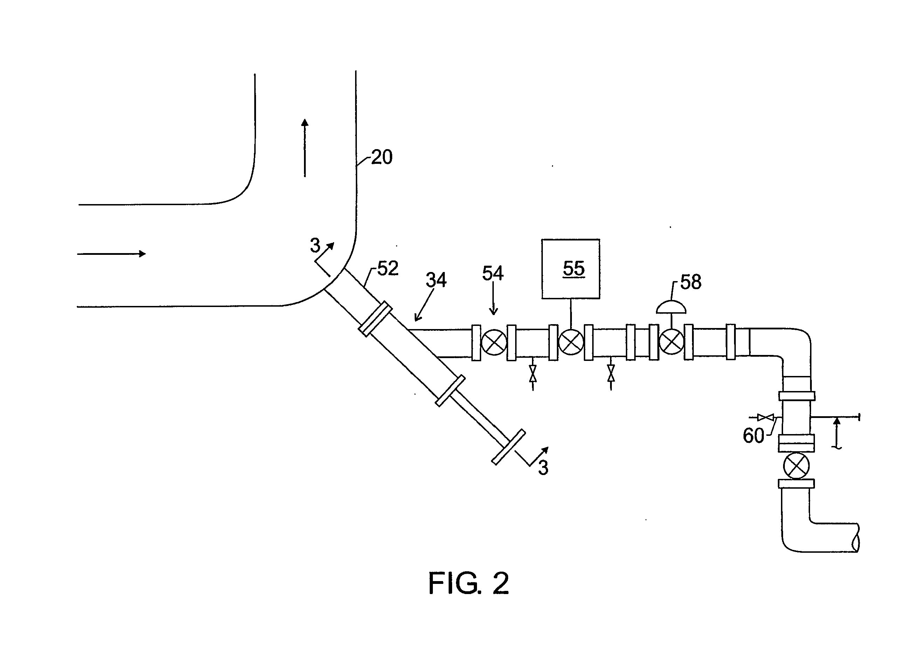

FIG. 2 shows elbow 20 with continuous take-off mechanism 34 in greater detail. The continuous take-off mechanism comprises a take-off cylinder 52, a slurry withdrawal line 54, an emergency shut off valve 55, a proportional motor valve 58 to regulate flow and a flush line 60. The reactor is run "liquid" full. Because of dissolved monomer the liquid has slight compressibility, thus allowing pressure control of the liquid full system with a valve. Diluent input is generally held constant, the proportional motor valve 58 being used to control the rate of continuous withdrawal to maintain the total reactor pressure within designated set points.

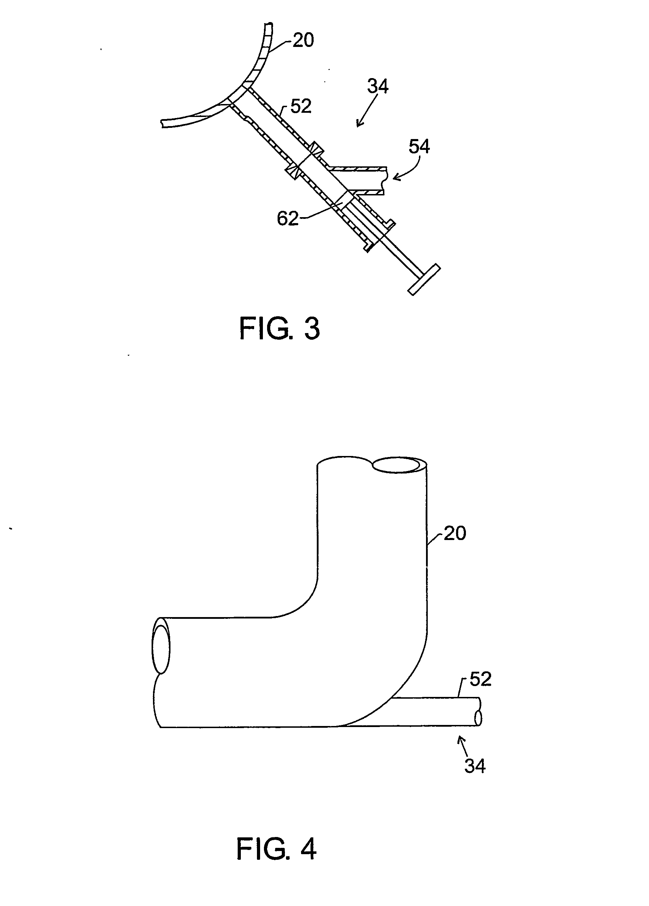

FIG. 3, which is taken along section line 3--3 of FIG. 2, shows the smooth curve or elbow 20 having associated therewith the continuous take-off mechanism 34 in greater detail, the elbow 20 thus being an appendage-carrying elbow. As shown, the mechanism comprises a take-off cylinder 52 attached, in this instance, at a right angle to a tangent to the outer surface of the elbow. Coming off cylinder 52 is slurry withdrawal line 54. Disposed within the take-off cylinder 52 is a ram valve 62 which serves two purposes. First it provides a simple and reliable clean-out mechanism for the take-off cylinder if it should ever become fouled with polymer. Second, it can serve as a simple and reliable shut-off valve for the entire continuous take-off assembly.

FIG. 4 shows a preferred attachment orientation for the take-off cylinder 52 wherein it is affixed tangentially to the curvature of elbow 20 and at a point just prior to the slurry flow turning upward. This opening is elliptical to the inside surface. Further enlargement could be done to improve solids take-off.

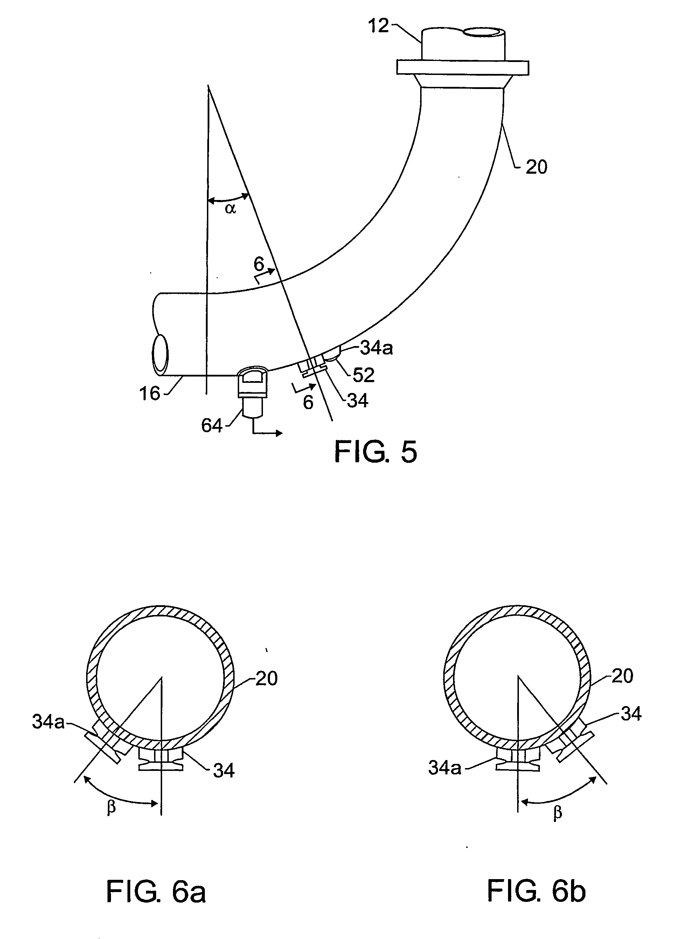

FIG. 5 shows four things. First, it shows an angled orientation of the take-off cylinder 52. The take-off cylinder is shown at an angle, alpha, to a plane that is (1) perpendicular to the centerline of the horizontal segment 16 and (2) located at the downstream end of the horizontal segment 16. The angle with this plane is taken in the downstream direction from the plane. The apex for the angle is the center point of the elbow radius as shown in FIG. 5. The plane can be described as the horizontal segment cross sectional plane. Here the angle depicted is about 24 degrees. Second, it shows a plurality of continuous take-off appendages, 34 and 34a. Third, it shows one appendage, 34 oriented on a vertical center line plane of lower segment 16, and the other, 34a, located at an angle to such a plane as will be shown in more detail in FIG. 6. Finally, it shows the combination of continuous take-off appendages 34 and a conventional settling leg 64 for batch removal, if desired.

In another embodiment of this invention, a polymerization process is provided. The process comprises: 1) polymerizing, in a loop reaction zone, at least one olefin monomer in a liquid diluent to produce a fluid slurry, wherein the fluid slurry comprises liquid diluent and solid olefin polymer particles; 2) withdrawing the fluid slurry comprising withdrawn liquid diluent and withdrawn solid polymer particles by alternately carrying out the following steps: a) allowing the fluid slurry to settle into at least one settling zone and thereafter withdrawing a batch of the thus settled slurry from the settling zone as an intermediate product of the process, thereafter shutting off the valve at the bottom of the settling zone; and b) thereafter continuously withdrawing the fluid slurry comprising withdrawn liquid diluent and withdrawn solid polymer particles as an intermediate product of the process. In step b), the reactor conditions can be adjusted during startup to raise reactor solids by at least 10%.

As can be seen from the relative sizes, the continuous take-off cylinders are much smaller than the conventional settling legs. Yet three 2-inch (51 mm) ID continuous take-off appendages can remove as much product slurry as 14 8-inch (200 mm) ID settling legs. This is significant because with current large commercial loop reactors of 15,000-18,000 gallon (57-68 m³) capacity, six eight inch settling legs are used. It is not desirable to increase the size of the settling legs because of the difficulty of making reliable valves for larger diameters. As noted previously, doubling the diameter of the pipe increases the volume four-fold and there simply in not enough room for four times as many settling legs to be easily positioned. Also the more numerous larger settling legs are more expensive and require a more complicated control scheme than the smaller continuous take off device. Hence the invention makes feasible the operation of larger, more efficient reactors. Reactors of 20,000 gallons (76 m³) or greater, and even 30,000 gallons (114 m³) or greater are made possible by this invention. Generally the continuous take-off cylinders will have a nominal internal diameter within the range of 1 inch (25 mm) to less than 8 inches (200 mm). Preferably they will be about 2-3 inches (25-76 mm) internal diameter. Also, the smaller continuous take off cylinders are generally less risky than more numerous and larger-diameter settling legs. This is because if piping failure should occur, a smaller line and hence smaller leakage rate of hydrocarbon is involved. Also, the continuous take off cylinders have a lower tendency to plug and hence to involve hazardous maintenance procedures.

FIG. 6 is taken along section line 6--6 of FIG. 5 and shows take-off cylinder 34a attached at a place that is oriented at an angle, beta, to a vertical plane containing the centerline of the reactor. This plane can be referred to as the vertical center plane of the reactor. This angle can be taken from either side of the plane or from both sides if it is not zero. The apex of the angle is located at the reactor center line. The angle is contained in a plane perpendicular to the reactor center line as shown in FIG. 6.

It is noted that there are three orientation concepts here. First is the attachment orientation, i.e. tangential as in FIG. 4 and perpendicular as in FIG. 2 or 7 or any angle between these two limits of 0 and 90 degrees. Second is the orientation relative to how far up the curve of the elbow the attachment is as represented by angle alpha (FIG. 5). This can be anything from 0 to 60 degrees but is preferably 0 to 40 degrees, more preferably 0 to 20 degrees. Third is the angle, beta, from the center plane of the longitudinal segment (FIG. 6). This angle can be from 0 to 60 degrees, preferably 0 to 45 degrees, more preferably 0-20 degrees.

FIG. 7 shows an embodiment where the continuous take-off cylinder 52 has an attachment orientation of perpendicular, an alpha orientation of 0 (inherent since it is at the end, but still on, the straight section), and a beta orientation of 0, i.e. it is right on the vertical centerline plane of the lower horizontal segment 16.

FIG. 8 shows in detail the impeller means 22 for continuously moving the slurry along its flow path. As can be seen in this embodiment the impeller is in a slightly enlarged section of pipe, which serves as the propulsion zone for the circulating reactants. Preferably the system is operated so as to generate a gange pressure differential of at least 18 psi (124 kPa) preferably at least 20 psi (138 kPa), more preferably at least 22 psi (152 kPa) between the upstream and downstream ends of the propulsion zone in a nominal two foot diameter reactor with total flow path length of about 950 feet (290 m) using isobutane to make predominantly ethylene polymers. A gange pressure as much as 50 psi (345 kPa) or more is possible. This can be done by controlling the speed of rotation of the impeller, reducing the clearance between the impeller and the inside wall of the pump housing or by using a more aggressive impeller design as is known in the art. This higher-pressure differential can also be produced by the use of at least one additional pump.

Generally the system is operated so as to generate a pressure differential, expressed as a loss of pressure per unit length of reactor, of at least 0.07, generally 0.07 to 0.15 foot slurry height pressure drop per foot of reactor length for a nominal 24 inch diameter reactor. Preferably, this pressure drop per unit length is 0.09 to 0.11 for a 24 inch diameter reactor. For larger diameters, a higher slurry velocity and a higher pressure drop per unit length of reactor is needed. This assumes the density of the slurry which generally is about 0.5-0.6.

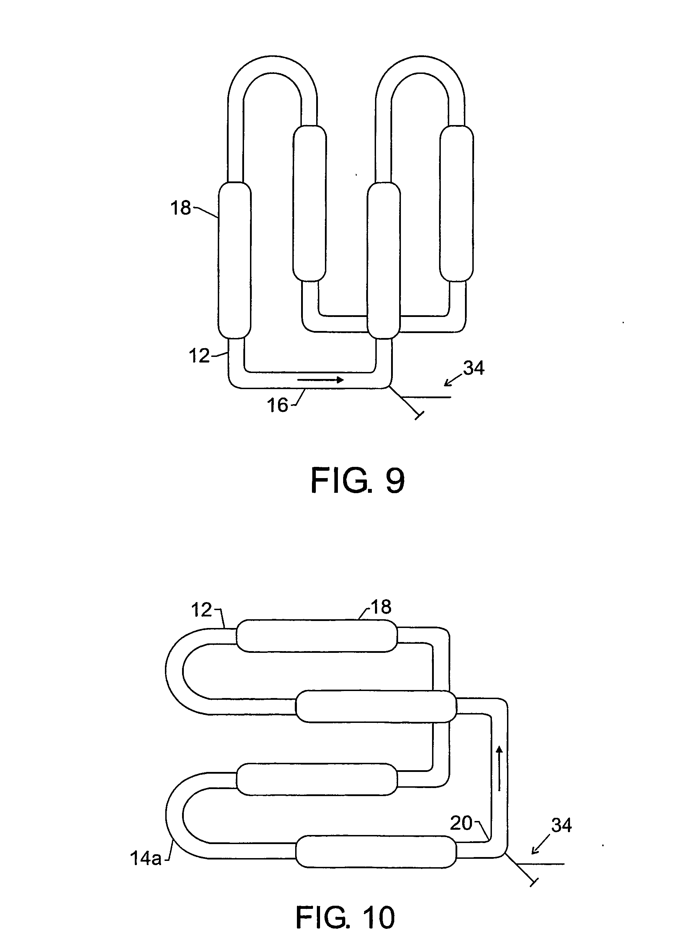

FIG. 9 shows the upper segments as 180 degree half circles which is the which is the preferred configuration. The vertical segments are at least twice the length, generally about seven to eight times the length of the horizontal segments. For instance, the vertical flow path can be 190-225 feet (58-69 m) and the horizontal segments 25-30 feet (7.6-9.1 m) in flow path length. Any number of loops can be employed in addition to the four depicted here and the eight depicted in FIG. 1, but generally four or eight are used. Reference to nominal two foot diameter means an internal diameter of about 21.9 inches (556 mm). Flow length is generally greater than 500 feet (152 m), generally greater than 900 feet (274 m), with about 940 to 2000 feet (286-610 m) being quite satisfactory.

Fig. 10 shows a horizontal loop reactor 11 that includes horizontal segments and curved and straight vertical segments. The vertical segments define zones of vertical flow. The reactor is cooled by means of two pipe heat exchangers formed by pipe 12 and jacket 18. As shown, each straight vertical segment is connected to a horizontal segment by a smooth bend or elbow 20, thus providing a continuous flow path substantially free from internal obstructions. As shown, the curved vertical segments are 180-degree half-circles extending between adjacent horizontal segments, which is another desirable configuration. Alternatively, the vertical segments may all be half-circles or straight pipes or any desirable combination, so long as the vertical segments are connected to the horizontal segments.

In Fig. 10, the horizontal segments are at least twice the length, generally about seven to eight times the length, of the vertical segments. For instance, the horizontal segments can be 190-225 feet (58-69 m) in flow path length and the vertical segments can be 25-30 feet (7.6-9.1 m) in flow path length. Any number of loops can be employed in addition to the four depicted here, but generally four or eight are used. Reference to a nominal two foot diameter means an internal diameter of about 21.9 inches (556 mm). Flow length is generally greater than 500 feet (152 m), generally greater than 900 feet (274 m), with about 940 to 2000 feet (286-610 m) being quite satisfactory.

The continuous take-off appendage 34 is shown at the downstream end of a horizontal segment of the loop reactor. The location can be in an area near the last point in the loop where flow turns upward before the catalyst introduction point so as to allow fresh catalyst the maximum possible time in the reactor before it first passes a take-off point. However, the continuous take-off appendage can be located on any segment or any elbow.

The horizontal loop reactor of Fig. 10 may be used as an alternative to the vertical loop reactor 10 of Figs. 1 and 9 and in combination with any of the other features of the present invention.

FIG. 11 shows an arrangement for the downstream recovery system for separating the solid polymer particles from the diluent in the intermediate product slurry withdrawn from the polymerization reactor. After the intermediate product slurry is withdrawn from the reactor, it passes through one or more conduits 36. The conduits 36 typically include surrounding conduits 40 which is provided with a heated fluid, thereby forming flashline heaters to provide indirect heating to the slurry traveling through the flashline 36. This flashline heater heats the reactor effluent, or at least prevents an excessive cooling of the effluent. The surrounding conduit 40 may be essentially the same length as the flashline 36. In some systems utilizing a flashline heater, some or all of the diluent will flash in flashline 36 prior to introduction to the flash chamber 28. However, the terms "flash chamber" and "flash tank" still are frequently used for the tank that follows the flashline, where vaporized diluent separates from polymer solids. "Flash tank" or "flash chamber" is still used even though there may little or no flashing in the flash tank if all or substantially all of the diluent is vaporized in the flashline. In some designs which have the flashlines discharging at higher pressures and without downstream drying devices, the flashlines are designed so there is little to no pressure drop on entering the tank which follows it other than that associated with flow in the line at high velocity and that of changing this flow as it enters the tank. It is also contemplated that all or substantially all of the diluent is vaporized by the time the withdrawn material reaches the tank following the flashline.

Conduit 36 may be surrounded by several sections of surrounding conduit 40 to provide greater control over the flashline heating. For example, a flashline heater may have 20 or more sections of surrounding conduit, each 20 or more feet in length. The flashline heater sections may share a steam controller, in effect controls temperature, or they may have individual stem controllers. As disclosed in U.S. Patent No. 4,424,341, the surrounding conduit 40 should be provided with low pressure steam to avoid melting the solid polymer particles traveling through flashline conduit 36.

The intermediate product slurry passes via conduit 36 to downstream separation equipment. The flashlines heater may discharge to a "funnel" 66 and a cyclone 68 as shown in FIG. 11. The funnel 66 provides a zone where the material within a plurality of flashlines 36 may be combined to form a single stream comprising diluent and solid polymer particles. As such, this funnel need not have a tip opening that is larger than the bottom opening (as a household funnel does), but rather may be any shape or size that facilitates the merging of one or more individual streams at the inlet to a combined stream at the outlet. This funnel can be used to shape the stream into the standard cyclone entrance dimensions described below. Also, as the velocities in the flash lines are some times very high, the funnel or transition piece can be used to slow down the slurry to velocities acceptable for use in a cyclone. Additionally, the funnel can be designed so that there is more than one entrance to the cyclone or so that more than one cyclone could be used.

From the funnel 66, the single stream can be fed to a cyclone 68 in which vaporized diluent and other vapor components are separated from solid polymer particles. A cyclone 68 separates vapor and solids by centrifugal force. Cyclones are widely used for dust-collection as well as a wide variety of other applications. (See Perry's Chemical Engineers' Handbook, Seventh Ed., p. 17-27. The illustrations in Perry's does not represent the high efficiency cyclone to be used in this service. A particle-laden gas enters a cylindrical or conical chamber tangentially at one or more points and leaves through a central opening. The particles, by virtue of their inertia, will tend to move toward the outside separator wall, from which they are led into a receiver. A cyclone is similar to a settling chamber, except that gravitational acceleration is at least partially replaced by centrifugal acceleration. In a cyclone, the gas path involves a double vortex, with the gas spiraling downward at the outside and upward at the inside. The gas exits at a top portion of the cyclone, and the solids exit at a bottom portion of the cyclone.

The cyclone 68 can be operated at a pressure and temperature similar to those used for high pressure flash chambers described above. By way of further example, the cyclone 68 may be operated at the pressures and temperatures typically employed for an intermediate pressure flash chamber, for example, the intermediate pressure flash chamber of a two-stage flash system as set forth in Hanson et al. U.S. Patent No. 4,424,341. Preferably, the cyclone or cyclonic zone can be operated at a pressure within the range of 100-1500 psia (7-105 kg/cm²), alternatively 125-275 psia (8.8-19 kg/cm²), alternatively 150-250 psia (10.5-17.6 kg/cm²), alternatively 140-190 psia (9.8-13.4 kg/cm²), alternatively about 170 psia (11.9 kg/cm²). The cyclone or cyclonic zone can be operated at a temperature within the range of 100-250°F (37.8-121°C), preferably 130-230°F (54.4-110°C), more preferably 150-210°F (65.6-98.9°C) or 170-200°F (76.6-93.3°C). The narrower ranges are particularly suitable for polymerizations using 1-hexene comonomer and isobutane diluent, with the broader ranges being suitable for higher 1-olefin comonomers and hydrocarbon diluents in general.

By directing the flashline(s) to the cyclone, better separation efficiency may be achieved and substantially all of the solids can be separated from the overhead vapor stream. Complete hydrocarbon vapor separation takes place in the purge column. The cyclone may be connected to a flash tank or to a fluff receiver 70 as shown in FIG. 11. Because a majority of the vapor is separated by the cyclone 68, the fluff receiver 70 can be smaller than the flash chambers or flash gas separators that have been used in the past. For example, the volume of an exemplary fluff receiver (the receiving zone) may be is in the range of 33,675 gal (127.5 m³) (13'X28' plus cone) while the fluff receiver would be about 13,500 gal (51-1 m³) (with approximate dimensions of 10'X20' plus cone), and both would have a design hold up of approximately 44,000 pounds (20,000 kg) of intermediate polymer product discharged from the reaction zone and processed in the recovery system. This is for a fluff receiver system for a loop reactor having a volume of 35,500 gallons (127 m³). The fluff receiver 70 can be smaller because little or no space is to be used for separating gas from fluff. Another advantage is that a run down line from the cyclone is generally not required.

Vaporized diluent exits the cyclone 68 via conduit 72 for further processing which may include passing through a flash gas filter 74 where fines are separated from flash gas. The fines are passed out of the filter 74 using cycling valves 76a and 76b. The flash gas exits from the top of the filter 74. The flash gas may be condensed by indirect heat exchange or by compression and recycled to the polymerization reactor or related systems. Polymer particles are withdrawn from fluff receiver 70 and pass to a fluff chamber 78. The fluff chamber 78 is located after the fluff receiver 70, or more particularly after the control valve 80 that controls the fluff receiver outlet. The control valve 80 may be a cycling ball valve positioned upstream of the fluff chamber 78, and a second cycling ball valve 82 may be positioned downstream of the fluff chamber 78. The fluff chamber 78 may act as a let down chamber, for letting down the pressure of the material being transferred from the fluff receiver 70.

The cycling valves operate so that the top valve opens while the bottom is closed. During this period, the fluff chamber 78 is filled with polymer solids from the fluff receiver 70, to a desired level or amount of polymer solids, not to exceed the maximum allowable capacity. Preferably, the fluff chamber is filled completely. The rate at which the valve cycle is repeated is varied to control level of fluff in fluff receiver 70. When the desired level or amount is reached, the top valve 80 closes and the bottom valve 82 opens, and the polymer solids are transferred to a relatively lower pressure vessel, such as a purge column. These steps are repeated as needed to transfer the material from the fluff receiver 70 to the purge column. A controller may be connected to the first valve and the second valve, and the controller may be adapted to alternate the opening of each of the valves.

Preferably the cycling valve controller can be used to hold a constant level of intermediate product polymer in the bottom of the flash chamber. This gives diluent in the product polymer time to diffuse from the inside of the particle to the surface and vaporize. Also, holding a level in the flash chamber can give the cycling valves a "polymer seal" such that if the valve seat is worn or does not perfectly seal the high pressure zone gas (but still holds back the majority of polymer) from the low pressure zone, any high pressure gas that leaks from the high pressure zone to the low pressure zone has to pass through the torturous path of the void space between the particles. This slows down the leakage of high-pressure gas to the low-pressure zone. Both of the these items contribute to improved efficiency of the recovery of high pressure flash gas via condensation without compression. Other suitable means for operating the first and second valves so that the valves are not open at the same time may be used.

The cycling valves may be configured and operated such that the polymer solids residence time is maintained at a desired level. The polymer solids residence time preferably is maintained at substantially zero to 2 minutes. Alternatively, the polymer solids residence time preferably is maintained in the range of from 10 seconds to 30 minutes. Alternatively, the polymer solids residence time preferably is maintained in the ranges of from 30 to 90 minutes or from 30 to 120 minutes.

By maintaining a desired level of solid olefin polymer particles in an intermediate pressure zone, one can control the polymer solids residence time, which is the average amount of time a polymer particle spends in the intermediate pressure zone. An increase in polymer solids residence time allows flashing and/or separating of more diluent, including more entrained diluent, from the polymer solids, thereby increasing the purity and processability of the polymer exiting the zone. Furthermore, by maintaining a desired level of polymer solids in the intermediate pressure zone, one can create a pressure seal between the zone and downstream equipment. In addition, operating and maintenance costs are reduced by providing a pressure seal between the intermediate pressure zone and purge zone that does not require the use of on/off valves. Additionally, the need for a separate fluff chamber may be eliminated. The pressure seal may rely on the level of polymer solids to restrict the flow of gaseous or liquid (if any present) diluent out of the intermediate pressure zone. The particles of polymer solids may substantially close off the majority of flow path (cross sectional area) available to the diluent. Nonetheless, it is contemplated that a small amount of flow path may be available thorough the small gaps between adjacent particles. This small continuous flow may reduce the ultimate recovery efficiency of diluent in the intermediate pressure zone.

Another way to let the solids down from the high-pressure flash tank to the low-pressure flash tank or purge column is to use a throttling valve; preferably a Vee notched ball valve. The vee notched ball valve simply throttles the flow of gas and solids by means of a variable opening area and is able to be adjusted to hold a constant solids level in the high-pressure flash tank. This one valve can replace the two cycling valves, the fluff chamber 78, and is smaller so it is less costly than the two cycling valves. Since it moves less than the cycling valves, the wear rate on the valve is much less than on the cycling valves, and so maintenances is reduced. Also its steady operation reduces pressure swings on down stream equipment so that they operate more consistently and without their valves constantly reacting to a changing up stream pressure. The single vee notched ball or other suitable valve (such as a rotary valve with an added ball valve for isolation purposes) uses the above-described principle of polymer seal so that the valve does not have to handle all of the pressure drop between the high and low pressure zones. The length and diameter of the line between the two pressure zones change be selected to control the leakage rate of gas that pass the valve, the pressure that the valve sees, and the distance separating the two vessels.

From the fluff chamber 78, the polymer particles may be passed to a low pressure separation chamber or to a purge column. It has been found that the continuous take-off not only allows for higher solids concentration upstream in the reactor, but also allows better operation of the flashline heaters and the cyclone, thus allowing the substantially all of the withdrawn diluent to be vaporized in the flashline and separated in the cyclone.

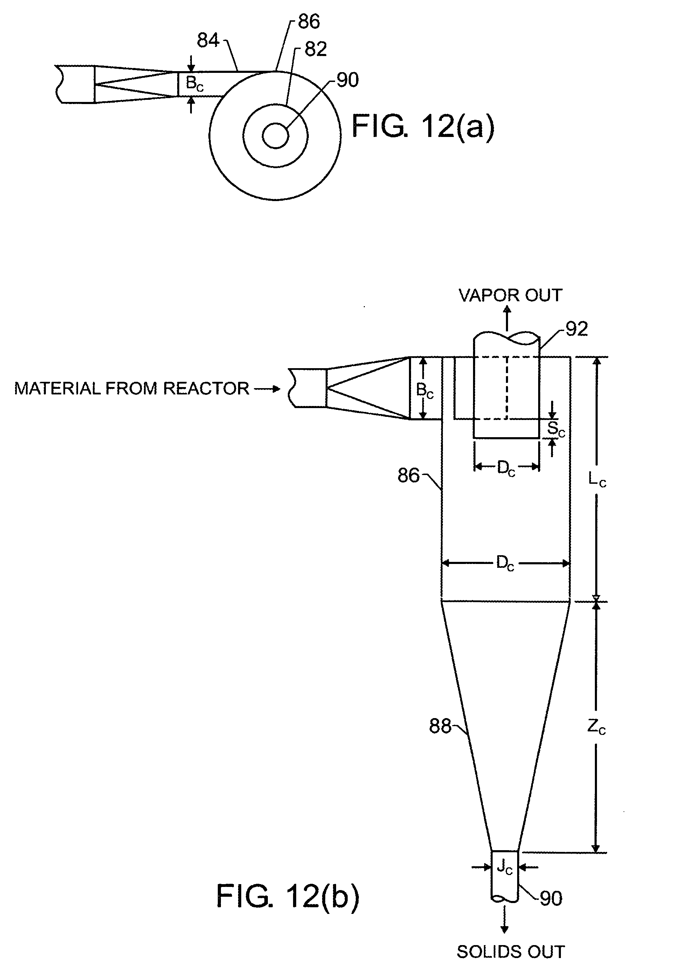

Figs. 12(a) and 12(b) show top and side views, respectively, of a cyclone for use in the present process and apparatus. The cyclone for the present process may be configured somewhat differently than that shown in Fig. 12(a) and 12(b). For example, the top view need not be concentric circles for a very high efficiency cyclone. As another example, the bottom of the cyclone may be larger or cut-off to provide a very large bottom outlet. The cyclone receives a fluid stream from the loop reactor through a cyclone inlet 84. The cyclone inlet 84 may be any shape but frequently is rectangular, and it is sized such that it is longer in the vertical direction than the horizontal. The cyclone inlet 84 discharges the fluid stream into an upper portion 86 of the cyclone. By discharging the fluid stream tangentially into a tank, enhanced separation occurs, even if the tank is not, strictly speaking, a cyclone tank, and such discharging is generally superior to discharging in a perpendicular fashion. The fluid travels down in a vortex toward a lower portion 88 of the cyclone. Solids are separated from vapor by centrifugal force. The separated solids exit from a solids outlet 90, and the separated vapor exits from a vapor outlet 92, which may extend a distance into the cyclone. In FIG. 12, D_{C} is the diameter of the upper portion of the cyclone. B_{C} is the inlet width, while H_{C} is the inlet height. L_{C} is the length of the upper portion of the cyclone, and Z_{C} is the length of the lower, tapering portion of the cyclone. Relative sizes for the cyclone in FIG. 12 are optional.-Fisher-Klosterman is often usually the vendor of choice for high-efficiency cyclones and their literature can be consulted for configurations.

Table 1 shows the estimated performance of a typical flash chamber with the flashlines entering tangentially. The amount of solids and the particle size distribution is given for the fluff in the overhead feeding the cyclone.

**Table 1**

| Flash Chamber overhead | | | | |
|---|---|---|---|---|
| Standard Screen Size | Microns | Flash Tank Fraction Overhead | lbs/hr | % on Screen |
| 16 | 1190 | - | - | - |
| 20 | 841 | - | - | - |
| 30 | 595 | - | - | - |
| 40 | 420 | - | - | - |
| 50 | 297 | - | - | - |
| 60 | 250 | - | - | - |
| 70 | 210 | - | - | - |
| 80 | 177 | 1.0% | 17.5 | 0.39% |
| 100 | 149 | 2.0% | 17.5 | 0.39% |
| 140 | 105 | 4.0% | 35.0 | 0.78% |
| 200 | 74 | 8.0% | 140.0 | 3.11% |
| 230 | 63 | 20.0% | 875.0 | 19.46% |
| 270 | 53 | 60.0% | 2,100.0 | 46.69% |
| 325 | 44 | 70.0% | 612.5 | 13.62% |
| PAN | - | 80.0% | 700.0 | 15.56% |
| | | | 4,497.5 | 100.00% |

Table 2 shows the estimated performance of a cyclone and fluff receiver arrangement. The particle size distribution for the solids fed the Flash Gas Filter are shown.

**Table 2**

| Feed to Flash Gas Filter | | | | | | |
|---|---|---|---|---|---|---|
| Standard Screen Size | Microns | Cyclone Fraction Overhead | Cyclone Efficiency | lbs/hr | % on Screen | |
| 16 | 1190 | - | 100.0% | - | - | |
| 20 | 841 | - | 100.0% | - | - | |
| 30 | 595 | - | 100.0% | - | - | |
| 40 | 420 | - | 100.0% | - | - | |
| 50 | 297 | - | 100.0% | - | - | |
| 60 | 250 | - | 100.0% | - | - | |
| 70 | 210 | - | 100.0% | - | - | |
| 80 | 177 | - | 100.0% | - | - | |
| 100 | 149 | - | 100.0% | - | - | |
| 140 | 105 | 0.001% | 100.0% | 0.009 | 0.09% | |
| 200 | 74 | 0.006% | 100.0% | 0.105 | 1.05% | |
| 230 | 63 | 0.018% | 100.0% | 0.788 | 7.88% | |
| 270 | 53 | 0.054% | 99.9% | 1.890 | 18.90% | |
| 325 | 44 | 0.162% | 99.8% | 1.418 | 14.18% | |
| PAN | - | 0.662% | 99.3% | 5.791 | 57.91% | |
| | | | | 10.000 | 100.00% | |

### EXAMPLES

A four vertical leg polymerization reactor using a 26 inch (660 mm) Lawrence Pumps Inc. pump impeller D51795/81-281 in a M51879/FAB casing was used to polymerize ethylene and hexene-1. This pump was compared with a 24 inch (610 mm) pump which gave less aggressive circulation (0.66 ft of pressure drop vs 0.98). This was then compared with the same more aggressive circulation and a continuous take-off assembly of the type shown by reference character 34 of FIG. 5. The results are shown below.

**TABLE 3**

| **Description** | **24 in Pump** | **26 in Pump** | **26 in Pump + CTO** |
|---|---|---|---|
| | | | |
| **Avg. Reactor Solids Concentration, wt %** | **39** | **45** | **53** |
| **Polymer Production Rate, mlbs/hr** | **40.1** | **40.7** | **39.9** |
| **Reactor Circulation Pump Power, kw** | 430 | 691 | 753 |
| **Circulation Pump Pressure Diff, psi** | 14.3 | 22.4 | 23.7 |
| **Circulation Pump Head, ft** | 61.8 | 92.5 | 92.4 |
| **Reactor Slurry Flow Rate mGPM** | 39 | 46 | 45 |
| **Reactor Slurry Density** | 0.634 | 0.558 | 0.592 |
| **Reactor Temperature, F.** | 215.6 | 218.3 | 217.0 |
| **Ethylene Concentration, wt%** | 4.43 | 3.67 | 4.9 |
| **Hexene-1 Concentration, wt%** | 0.22 | 0.17 | 0.14 |
| **Reactor Heat Transfer Coefficient** | 270 | 262 | 241 |
| **Reactor Inside Diameter, inches** | 22.0625 | 22.0625 | 22.0625. |
| **Reactor Volume, gal** | 18700 | 18700 | 18700 |
| **Reactor Length, ft** | 941 | 941 | 941 |
| **Pressure Drop per Foot of Reactor, ft/ft** | 0.066 | 0.098 | 0.098 |

While this invention has been described in detail for the purpose of illustration, it is not to be construed as limited thereby, but is intended to cover all changes within the scope of the appended claims.

## Claims

1. A process for producing solid polymer particles, the process comprising:
polymerizing, in a loop reaction zone, at least one monomer to produce a fluid slurry comprising solid polymer particles in a liquid medium;
withdrawing continuously a portion of the slurry, comprising withdrawn liquid medium and withdrawn solid polymer particles, as an intermediate product of the process;
passing the intermediate product through a heated conduit, producing a concentrated intermediate product and a vapor;
separating the vapor from the concentrated intermediate product by centrifugal force in a cyclone; and
passing the concentrated intermediate product to a receiving zone.

2. The process of claim 1 wherein at least 90% of the vapor is separated from the concentrated intermediate product in the cyclone and passed to a filter zone.

3. The process of claim 1, further comprising:
passing the separated vapor from the cyclone to a filter; and
filtering fine polymer particles from the separated vapor.

4. The process of claim 1, wherein at least 90% of the polymer solids in the intermediate product are separated from the withdrawn medium in the cyclone.

5. The process of claim 1, further comprising the step of maintaining a concentration of solid polymer particles in the slurry in the zone of greater than 40 weight percent.

6. The process of claim 1, wherein the separated vaporized diluent from the cyclone is condensed without compression by heat exchange with a fluid having temperature within the range of 32 degrees F (0°C) to 200 degrees F (93°C).

7. The process of claim 1, wherein the volume of the receiving zone is in the range of 1000 to 20,000 cubic feet (28 to 570 m³).

8. The process of claim 1, further comprising the step of holding the polymer solids in the receiving zone for a polymer solids residence time sufficient to remove substantially all the unentrained diluent.

9. A process according to claim 8, wherein the polymer solids residence time is from 10 seconds to 30 minutes.

10. A process according to claim 8, wherein the polymer solids residence time is from 30 to 120 minutes.

11. A loop reactor apparatus comprising:
a pipe loop reactor adapted for conducting an olefin polymerization process comprising polymerizing at least one olefin monomer to produce a fluid slurry comprising solid olefin polymer particles in a liquid medium; and
at least one elongated hollow appendage in direct fluid communication with the pipe loop reactor adapted for continuous removal of a portion of the fluid slurry from the pipe loop reactor;
a flashline in fluid communication with the at least one elongated hollow appendage, wherein the flashline is surrounded by a conduit adapted for indirectly heating; and
a cyclone in fluid communication with the flashline;
wherein the flashline discharges to the cyclone.

12. The loop reactor apparatus of claim 11, further comprising:
a first chamber in fluid communication with the cyclone;
a second chamber in fluid communication with the first chamber; and
a first valve disposed between the first chamber and the second chamber;
a purge column in fluid communication with the second chamber.
a second valve disposed between the second chamber and the purge column; and
a controller for operating the first valve and the second chamber valve so that the valves are not open at the same time.

13. The loop reactor apparatus of claim 12, wherein the volume of the pipe loop reactor is in the range of 5,000 to 60,000 gallons (18,900 to 22,700 litres).

14. The loop reactor apparatus of claim 11, wherein the cyclone comprises a vapor outlet and a solids outlet, and the loop reactor apparatus further comprises a fine polymer particle filter fluidly connected to the vapor outlet of the cyclone.

15. The loop reactor apparatus of claim 11, further comprising a funnel fluidly connected to and disposed between the flashline and the cyclone.

16. The loop reactor apparatus of claim 11, further comprising a level sensor in contact with the first chamber for sensing the level of polymer solids in the first chamber, wherein the level sensor is connected to the first valve, and is adapted to maintain a desired level of polymer solids in the first chamber.

17. The loop reactor apparatus of claim 11, further comprising a timer connected to the first valve, wherein the timer determines the opening and closing of the first valve, so that the polymer solids are maintained in the first chamber for a desired time.

## Patentansprüche

1. Verfahren zum Herstellen fester Polymerpartikel, welches Verfahren umfasst:
Polymerisieren von mindestens einem Monomer in einer Schlaufenreaktorzone, um eine fluide Aufschlämmung zu erzeugen, die in einem flüssigen Medium feste Polymerpartikel aufweist;
kontinuierliches Abziehen eines Teils der Aufschlämmung, die als ein Zwischenprodukt des Verfahrens abgezogenes flüssiges Medium und abgezogene feste Polymerpartikel aufweist;
Führen des Zwischenprodukts durch eine erhitzte Leitung, wobei ein konzentriertes Zwischenprodukt und ein Dampf erzeugt werden;
Abtrennen des Dampfes von dem konzentrierten Zwischenprodukt mit Hilfe von Fliehkraft in einem Zyklon, und
Leiten des konzentrierten Zwischenprodukts in eine Aufnahmezone.

2. Verfahren nach Anspruch 1, worin mindestens 90% des Dampfes von dem konzentrierten Zwischenprodukt in dem Zyklon abgetrennt und in eine Filterzone geleitet werden.

3. Verfahren nach Anspruch 1, ferner umfassend:
Einleiten des abgetrennten Dampfes aus dem Zyklon in ein Filter; und
Filtrieren feiner Polymerpartikel aus dem abgetrennten Dampf.

4. Verfahren nach Anspruch 1, worin mindestens 90% der Polymerfeststoffe in dem Zwischenprodukt aus dem abgezogenen Medium in dem Zyklon abgetrennt werden.

5. Verfahren nach Anspruch 1, ferner umfassend den Schritt des Aufrechterhaltens einer Konzentration der festen Polymerpartikel in der Aufschlämmung in der Zone von mehr als 40 Gewichtsprozent.

6. Verfahren nach Anspruch 1, worin das abgetrennte verdampfte Verdünnungsmittel aus dem Zyklon ohne Kompression durch Wärmetausch mit einem Fluid kondensiert wird, das eine Temperatur im Bereich von 32 °F bis 200 °F (0 °C bis 93 °C) hat.

7. Verfahren nach Anspruch 1, worin das Volumen der Aufnahmezone im Bereich von 1.000 bis 20.000 ft³ (28 bis 570 m³) liegt.

8. Verfahren nach Anspruch 1, ferner umfassend den Schritt des Haltens der Polymerfeststoffe in der Aufnahmezone für eine Verweilzeit der Polymerfeststoffe, die ausreichend ist, um im Wesentlichen das gesamte nicht mitgeführte Verdünnungsmittel zu entfernen.

9. Verfahren nach Anspruch 8, worin die Verweilzeit der Polymerfeststoffe 10 Sekunden bis 30 Minuten beträgt.

10. Verfahren nach Anspruch 8, worin die Verweilzeit der Polymerfeststoffe 30 bis 120 Minuten beträgt.

11. Schlaufenreaktor-Apparat, umfassend:
einen Röhren-Schlaufenreaktor, der ausgelegt ist, um einen Prozess zur OlefinPolymerisation auszuführen, der das Polymerisieren mindestens eines Olefin-Monomers umfasst, um eine Fluid-Aufschlämmung zu erzeugen, die feste Olefin-Polymerpartikel in einem flüssigen Medium aufweist; und
mindestens einen langgestreckten Hohlkörperansatz in direkter fluider Verbindung mit dem Röhren-Schlaufenreaktor, der zur kontinuierlichen Entnahme eines Teils der fluiden Aufschlämmung aus dem Röhren-Schlaufenreaktor ausgelegt ist;
eine Entspannungsleitung in fluider Verbindung mit dem mindestens einen langgestreckten Hohlkörperansatz, wobei die Entspannungsleitung von einer zur indirekten Beheizung ausgelegten Rohrleitung umhüllt ist; und
einen Zyklon in fluider Verbindung mit der Entspannungsleitung, wobei die Entspannungsleitung in den Zyklon mündet.

12. Schlaufenreaktor-Apparat nach Anspruch 11, ferner aufweisend:
eine erste Kammer in fluider Verbindung mit dem Zyklon;
eine zweite Kammer in fluider Verbindung mit der ersten Kammer; und
ein erstes Ventil, das zwischen der ersten Kammer und der zweiten Kammer angeordnet ist;
eine Spülsäule in fluider Verbindung mit der zweiten Kammer;
ein zweites Ventil, das zwischen der zweiten Kammer und der Spülsäule angeordnet ist; und
eine Steuervorrichtung zur Betätigung des ersten Ventils und des Ventils der zweiten Kammer derart, dass die Ventile nicht gleichzeitig geöffnet sind.

13. Schlaufenreaktor-Apparat eines nach Anspruch 12, worin das Volumen des Röhren-Schlaufenreaktors 5.000 bis 60.000 Gallonen (18.900 bis 22.700 Liter) beträgt.

14. Schlaufenreaktor-Apparat nach Anspruch 11, worin der Zyklon einen Dampfauslass und einen Feststoffauslass aufweist und der Schlaufenreaktor-Apparat ferner ein Filter für feine Polymerpartikel aufweist, das mit dem Dampfauslass des Zyklons in fluider Verbindung steht.

15. Schlaufenreaktor-Apparat nach Anspruch 11, ferner aufweisend einen Trichter, mit der Entspannungsleitung und dem Zyklon in fluider Verbindung befindet und dazwischen angeordnet ist.

16. Schlaufenreaktor-Apparat nach Anspruch 11, ferner aufweisend einen Füllstandfühler im Kontakt mit der ersten Kammer zum Messen des Füllstands der Polymerfeststoffe in der ersten Kammer, wobei der Füllstandfühler mit dem ersten Ventil verbunden ist und ausgelegt ist, um einen gewünschten Füllstand der Polymerfeststoffe in der ersten Kammer aufrecht zu erhalten.

17. Schlaufenreaktor-Apparat nach Anspruch 11, ferner aufweisend einen mit dem ersten Ventil verbundenen Zeitgeber, wobei der Zeitgeber das Öffnen und Schließen des ersten Ventils bestimmt, so dass die Polymerfeststoffe in der ersten Kammer für eine festgelegte Zeit gehalten werden.

## Revendications

1. Processus pour produire des particules polymères solides, le processus comprenant les étapes suivantes :
polymériser, dans une zone de réaction en boucle, au moins un monomère pour produire une suspension liquide comprenant des particules polymères solides dans un milieu liquide ;
éliminer en continu une partie de la suspension, comprenant un milieu liquide éliminé et des particules polymères solides éliminées, en tant que produit intermédiaire du processus ;
faire passer le produit intermédiaire à travers un conduit chauffé, produisant un produit intermédiaire concentré et une vapeur ;
séparer la vapeur du produit intermédiaire concentré par force centrifuge dans un cyclone ;
acheminer le produit intermédiaire concentré vers une zone de réception.

2. Processus selon la revendication 1 dans lequel au moins 90% de la vapeur est séparée du produit intermédiaire concentré dans le cyclone et acheminé vers une zone de filtre.

3. Processus selon la revendication 1, comprenant en outre les étapes suivantes :
acheminer la vapeur séparée depuis le cyclone vers un filtre ; et
filtrer les particules polymères fines à partir de la vapeur séparée.

4. Processus selon la revendication 1 dans lequel au moins 90% des solides polymères dans le produit intermédiaire sont séparés du milieu éliminé dans le cyclone.

5. Processus selon la revendication 1, comprenant en outre l'étape de maintien d'une concentration de particules polymères solides dans la suspension dans la zone supérieure à 40 pour cent en poids.

6. Processus selon la revendication 1 dans lequel le diluant vaporisé séparé provenant du cyclone est condensé sans compression par échange de chaleur avec un liquide ayant une température dans la plage comprise entre 32 degrés F (0°C) et 200 degrés F (93°C).

7. Processus selon la revendication 1, dans lequel le volume de la zone de réception est dans la plage comprise entre 1000 et 20 000 pieds cubes (28 à 570 m³).

8. Processus selon la revendication 1, comprenant en outre l'étape de maintien des solides polymères dans la zone de réception durant un temps de séjour des solides polymères suffisant pour éliminer la quasi-totalité du diluant non-entraîné.

9. Processus selon la revendication 8, dans lequel le temps de séjour des solides polymères est compris entre 10 secondes et 30 minutes.

10. Processus selon la revendication 8, dans lequel le temps de séjour des solides polymères est compris entre 30 et 120 minutes.

11. Réacteur à boucle comprenant :
un réacteur à tuyau en boucle adapté pour effectuer un processus de polymérisation d'oléfines comprenant la polymérisation d'au moins un monomère d'oléfine pour produire une suspension liquide comprenant des particules polymères d'oléfines solides dans un milieu liquide ; et
au moins un appendice allongé creux en communication fluidique directe avec le réacteur à tuyau en boucle adapté pour l'élimination continue d'une partie de la suspension liquide à partir du réacteur à tuyau en boucle ;
un conduit d'évaporation en communication fluidique avec l'au moins un appendice allongé creux, le conduit d'évaporation étant entouré par un conduit adapté pour le chauffage indirect ; et
un cyclone en communication fluidique avec le conduit d'évaporation ;
dans lequel le conduit d'évaporation se décharge dans le cyclone.

12. Réacteur à boucle selon la revendication 11 comprenant en outre :
une première chambre en communication fluidique avec le cyclone ;
une deuxième chambre en communication fluidique avec la première chambre ; et
une première vanne disposée entre la première chambre et la deuxième chambre ;
une colonne de purge en communication fluidique avec la deuxième chambre.
une deuxième vanne disposée entre la deuxième chambre et la colonne de purge ; et
un dispositif de commande pour actionner la première vanne et la deuxième vanne de chambre de sorte que les vannes ne soient pas ouvertes en même temps.

13. Réacteur à boucle selon la revendication 12 dans lequel le volume du réacteur à tuyau en boucle est dans la plage comprise entre 5 000 et 60 000 gallons (18 900 à 22 700 litres).

14. Réacteur à boucle selon la revendication 11, dans lequel le cyclone comprend une sortie de vapeur et une sortie de solides, et le réacteur à boucle comprend en outre un filtre à particules polymères fines en liaison fluidique avec la sortie de vapeur du cyclone.

15. Réacteur à boucle selon la revendication 11 comprenant en outre un cône en liaison fluidique avec le conduit d'évaporation et le cyclone et disposé entre ceux-ci.

16. Réacteur à boucle selon la revendication 11 comprenant en outre un capteur de niveau en contact avec la première chambre pour détecter le niveau de solides polymères dans la première chambre, dans lequel le capteur de niveau est connecté à la première vanne et est adapté pour maintenir un niveau souhaité de solides polymères dans la première chambre.

17. Réacteur à boucle selon la revendication 11 comprenant en outre un temporisateur connecté à la première vanne, dans lequel le temporisateur détermine l'ouverture et la fermeture de la première vanne, de sorte que les solides polymères soient maintenus dans la première chambre pendant une durée souhaitée.
